# EUROPEAN PATENT APPLICATION

(11) **EP 4 617 797 A1**
(43) Date of publication of application: **17.09.2025**
(21) Application number: 23888698.0
(22) Date of filing: 07.11.2023
(51) Int. Cl.: G05B 13/02

(54) **DEVICE, METHOD, AND PROGRAM**

(30) Priority: 11.11.2022 JP 2022180701
(71) Applicant: Yokogawa Electric Corporation, Tokyo 180-8750 (JP)
(72) Inventor: LIU Zhuo, Musashino-shi, Tokyo 180-8750 (JP); ISHII Eiji, Musashino-shi, Tokyo 180-8750 (JP); TAKAMI Go, Musashino-shi, Tokyo 180-8750 (JP)
(74) Representative: Hoffmann Eitle
(86) International application number: PCT/JP2023/040041
(87) International publication number: WO 2024/101351

(57) **Abstract**

There is provided an apparatus including: a first acquisition unit which acquires a deviation between a process variable of a state in relation to a control target, and a set point; a second acquisition unit which acquires a control parameter supplied to the control target; a supply unit which supplies the deviation acquired by the first acquisition unit, and the control parameter acquired by the second acquisition unit, to a control model that has a plurality of sub-control models respectively associated with a plurality of aspects preset for the state, the control model using a sub-control model associated with an aspect in accordance with the process variable, to output a recommendation control parameter that is recommended to be supplied to the control target, in response to inputs of a deviation and a control parameter; and an output unit which outputs, in response to the supply being performed from the supply unit to the control model, the recommendation control parameter that is output from the control model.

## Description

### BACKGROUND

### 1. TECHNICAL FIELD

The present invention relates to an apparatus, a method, and a program.

### 2. RELATED ART

Patent Documents 1 to 4 discloses that "... selects the map of manipulated variables based on the setting value SV to calculate the manipulated variable MV using the selected map of manipulated variables" (paragraph 0031 of Patent Document 1), or the like.

### Prior Art Documents

### Patent Document

Patent Document 1: Japanese Patent Application Publication No. 2022-156797
Patent Document 2: Japanese Patent Application Publication No. 2020-95352
Patent Document 3: Japanese Patent Application Publication No. 2021-117699
Patent Document 4: Japanese Patent Application Publication No. 2022-014099

### General Disclosure

In a first aspect of the present invention, there is provided an apparatus including:
a first acquisition unit which acquires a deviation between a process variable of a state in relation to a control target, and a set point; a second acquisition unit which acquires a control parameter supplied to the control target; a supply unit which supplies the deviation acquired by the first acquisition unit, and the control parameter acquired by the second acquisition unit, to a control model that has a plurality of sub-control models respectively associated with a plurality of aspects preset for the state, the control model using a sub-control model associated with an aspect in accordance with the process variable, among the plurality of sub-control models, to output a recommendation control parameter that is recommended to be supplied to the control target, in response to inputs of a deviation and a control parameter; and an output unit which outputs, in response to the supply being performed from the supply unit to the control model, the recommendation control parameter that is output from the control model.

The apparatus may further include: a specification unit which specifies an aspect in accordance with the process variable, among the plurality of aspects; and a selection unit which selects, from among the plurality of sub-control models, a sub-control model corresponding to the aspect specified by the specification unit. The supply unit may supply the deviation acquired by the first acquisition unit, and the control parameter acquired by the second acquisition unit, to the sub-control model selected by the selection unit among the plurality of sub-control models.

In the above-described apparatus having the specification unit and the selection unit, the specification unit may specify an aspect according to which of a plurality of preset numerical ranges the deviation is included in.

In any of the above-described apparatuses having the specification unit and the selection unit, each of at least two sub-control models among the plurality of sub-control models may output, in response to inputs of a deviation between a process variable and a common set point, and a control parameter, a recommendation control parameter that is recommended to reduce the deviation.

In the above-described apparatus having the specification unit and the selection unit, the specification unit may specify an aspect according to which of a plurality of preset numerical ranges the process variable is included in.

In any of the above-described apparatuses having the specification unit and the selection unit, at least two sub-control models among the plurality of sub-control models may be associated with specific set points different from each other, and each may output, in response to inputs of a deviation between a process variable and a specific set point which is included in the specific set points, and a control parameter, a recommendation control parameter that is recommended to reduce the deviation. The apparatus may further include a setting unit which sets, as the set point, any of the specific set points of the at least two sub-control models according to the aspect specified by the specification unit.

In any of the above-described apparatuses having the specification unit and the selection unit, each sub-control model may have a change amount output model which outputs, in response to inputs of a deviation and a control parameter, a recommendation change amount for recommending a change for the control parameter, and an addition unit which adds the control parameter supplied to the control target and the recommendation change amount that is output from the change amount output model, to calculate the recommendation control parameter. The plurality of sub-control models may share the addition unit.

In any of the above-described apparatuses having the specification unit and the selection unit, change amount output models, each of which is the change amount output model, in at least two sub-control models among the plurality of sub-control models, may output recommendation change amounts, each of which is the recommendation change amount, in ranges different from each other.

Any of the above-described apparatuses having the specification unit and the selection unit may further include: a learning processing unit which performs learning processing for each change amount output model to output the recommendation change amount that is recommended to increase a reward value that is determined by a preset reward function, by using learning data including the deviation that is acquired by the first acquisition unit, and the control parameter that is acquired by the second acquisition unit, and in response to inputs of the deviation and the control parameter.

In the above-described apparatus having the specification unit and the selection unit, the learning processing unit may perform learning processing for each change amount output model by using separate learning data.

In a second aspect of the present invention, there is provided a method including: performing a first acquisition by acquiring a deviation between a process variable of a state in relation to a control target, and a set point; performing a second acquisition by acquiring a control parameter supplied to the control target; performing a first supply by supplying the deviation acquired by the performing the first acquisition, and the control parameter acquired by the performing the second acquisition, to a control model that has a plurality of sub-control models respectively associated with a plurality of aspects preset for the state, the control model using a sub-control model associated with an aspect in accordance with the process variable, among the plurality of sub-control models, to output a recommendation control parameter that is recommended to be supplied to the control target, in response to inputs of a deviation and a control parameter; and performing an output by outputting, in response to the supply being performed by the performing the first supply to the control model, the recommendation control parameter that is output from the control model.

In a third aspect of the present invention, there is provided a program that causes a computer to function as: a first acquisition unit which acquires a deviation between a process variable of a state in relation to a control target, and a set point; a second acquisition unit which acquires a control parameter supplied to the control target; a supply unit which supplies the deviation acquired by the first acquisition unit, and the control parameter acquired by the second acquisition unit, to a control model that has a plurality of sub-control models respectively associated with a plurality of aspects preset for the state, the control model using a sub-control model associated with an aspect in accordance with the process variable, among the plurality of sub-control models, to output a recommendation control parameter that is recommended to be supplied to the control target, in response to inputs of a deviation and a control parameter; and an output unit which outputs, in response to the supply being performed from the supply unit to the control model, the recommendation control parameter that is output from the control model.

The summary clause does not necessarily describe all necessary features of the embodiments of the present invention. The present invention may also be a sub-combination of the features described above.

### BRIEF DESCRIPTION OF THE DRAWINGS

Fig. 1 shows a system 1 according to a first embodiment.
Fig. 2 shows a change amount output model 2061.
Fig. 3 shows the change amount output model 2061.
Fig. 4 shows another example of the change amount output model 2061.
Fig. 5 shows another example of the change amount output model 2061.
Fig. 6 shows an operation of an apparatus 200.
Fig. 7 shows transitions of a process variable PV and a control parameter P when a control target 101 is controlled.
Fig. 8 shows a system 1A according to a modified example.
Fig. 9 shows a correspondence between an aspect ID, a numerical range of a process variable PV, a sub-model ID, and a specific set point.
Fig. 10 shows an operation of an apparatus 200A.
Fig. 11 shows the transition of the process variable PV when the control target 101 is controlled.
Fig. 12 shows an example of a computer 2200 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

### <1. System 1>

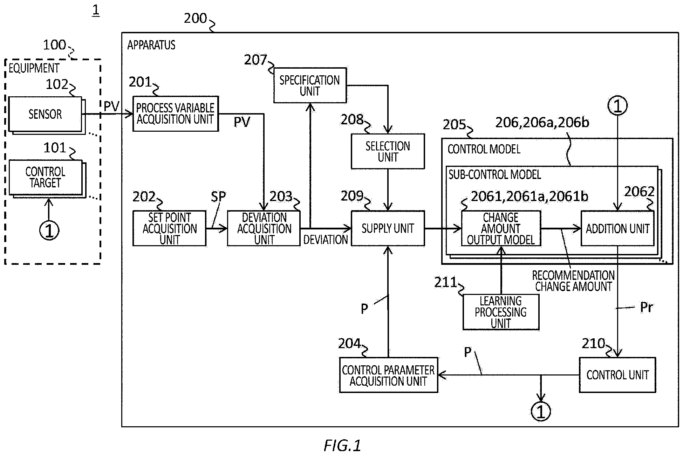

Fig. 1 shows a system 1 according to a first embodiment. The system 1 includes equipment 100 and an apparatus 200.

### <1.1. Equipment 100>

The equipment 100 is a facility, an apparatus, or the like including a control target 101. For example, the equipment 100 may be a plant, or may be a complex apparatus in which a plurality of devices are combined. Examples of the plant include: in addition to an industrial plant such as a chemical plant and a biotechnology plant, a plant for managing and controlling a well site such as a gas field or an oil field and its surrounding area; a plant for managing and controlling power generation such as hydroelectric, thermal, or nuclear power generation; a plant for managing and controlling energy harvesting from solar power, wind power, or the like; a plant for managing and controlling water and sewerage, dams, or the like; and others.

The equipment 100 is provided with one or more control targets 101. The control target 101 may be an instrument, a machine, an apparatus, or the like, serving as a target of a control; and may be a so-called field device. For example, the control target 101 may be: a sensor device such as a pressure gauge, a flow meter, and a temperature sensor; a valve device such as a flow control valve and a switching valve; or an actuator device such as a fan and a motor. The control target 101 is externally controlled by wire or wirelessly, but may also be manually controlled. The control target 101 may be controlled by a control unit 210 in the apparatus 200. In the present embodiment, as an example, the control target 101 may be controlled by being supplied with an instructive value IV (Instructed Value) for a manipulated variable MV (Manipulated Variable) from the control unit 210.

In addition, the equipment 100 may be provided with one or more sensors 102. Each sensor 102 may measure a process variable of a state inside or outside the equipment 100, that is, a process variable of a physical quantity indicating the state of the inside or the outside. At least one sensor 102 may measure a process variable PV (Process Variable) of the state of the control target 101. The process variable PV may be operational data indicating an operational state of a result of controlling the control target 101, or may indicate a controlled variable that is a target of the control. As an example, the process variable PV may indicate an output itself of the control target 101, or may indicate various values that change by the output of the control target 101. As an example, the process variable PV may indicate a pressure, a temperature, pH, a speed, a flow rate, or the like. Each sensor 102 may supply the measured process variable PV to the apparatus 200.

### <1.2. Apparatus 200>

The apparatus 200 may control the control target 101, and may be, for example, a controller for the control target 101. The apparatus 200 may output the instructive value IV for the manipulated variable MV of the control target 101 to execute a process control such as a regulation of a temperature, an adjustment of a liquid level, or an adjustment of a flow rate.

The apparatus 200 may be a computer such as a PC (a personal computer), a tablet type computer, a smartphone, a workstation, a server computer, or a general purpose computer, or may be a computer system in which a plurality of computers are connected. Such a computer system is also a computer in a broad sense. In addition, the apparatus 200 may be implemented by one or more virtual computer environments which are able to be run in the computer. Instead of this, the apparatus 200 may be a dedicated computer designed for an AI control, or may be dedicated hardware realized by a dedicated circuit. In addition, in a case where the apparatus 200 is able to be connected to the Internet, the apparatus 200 may be realized by cloud computing.

The apparatus 200 may have a process variable acquisition unit 201, a set point acquisition unit 202, a deviation acquisition unit 203, a control parameter acquisition unit 204, a control model 205, a specification unit 207, a selection unit 208, a supply unit 209, the control unit 210, and a learning processing unit 211. It should be noted that these blocks are functional blocks that are functionally separated, respectively, and do not necessarily need to match with actual device configurations. That is, in the present figure, a unit shown as one block is not limited to being configured by one device. In addition, in the present figure, units shown as separate blocks are not limited to being configured by separate devices.

### <1.2-1. Process Variable Acquisition Unit 201>

The process variable acquisition unit 201 acquires the process variable PV of the state in relation to the control target 101. The present embodiment is described as an example in which the process variable acquisition unit 201 acquires the process variable PV for one physical quantity from one sensor 102; however, process variables PV for a plurality of physical quantities may be respectively acquired from a plurality of sensors 102. The process variable acquisition unit 201 may supply the acquired process variable PV to the deviation acquisition unit 203.

### <1.2-2. Set Point Acquisition Unit 202>

The set point acquisition unit 202 acquires a set point SP (Set Point) of the state in relation to the control target 101. The set point acquisition unit 202 may acquire the set point SP of the process variable PV that is acquired by the process variable acquisition unit 201. The set point acquisition unit 202 may acquire the set point SP from an operator via an input unit (not shown). In the present embodiment, as an example, the set point acquisition unit 202 may acquire a preset reference set point as the set point SP. The set point acquisition unit 202 may supply the acquired set point SP to the deviation acquisition unit 203.

### <1.2-3. Deviation Acquisition Unit 203>

The deviation acquisition unit 203 is an example of a first acquisition unit, and acquires a deviation between the process variable PV and the set point SP of the state in relation to the control target 101. The deviation acquisition unit 203 may acquire the process variable PV from the process variable acquisition unit 201 and the set point SP from the set point acquisition unit 202, and calculate the deviation by subtracting the process variable PV from the set point SP. Instead of this, the deviation acquisition unit 203 may calculate the deviation by subtracting the set point SP from the process variable PV. The deviation acquisition unit 203 may supply the acquired deviation to the specification unit 207 and the supply unit 209. The deviation acquisition unit 203 may store the acquired deviation in a storage unit (not shown).

### <1.2-4. Control Parameter Acquisition Unit 204>

The control parameter acquisition unit 204 is an example of a second acquisition unit, and acquires a control parameter P supplied to the control target 101. The control parameter acquisition unit 204 may acquire the control parameter P from the control unit 210 described below, and as an example in the present embodiment, the control parameter P may be acquired each time the control unit 210 supplies the control parameter P to the control target 101. The control parameter P may indicate the instructive value IV for the manipulated variable MV of the control target 101. When the control target 101 is a valve, the control parameter P may indicate an opening degree of a valve, as an example. The control parameter acquisition unit 204 may supply the acquired control parameter P to the supply unit 209.

### <1.2-5. Control Model 205>

The control model 205 outputs a recommendation control parameter Pr that is recommended to be supplied to the control target 101, in response to inputs of the deviation and the control parameter P. The control model 205 may output the recommendation control parameter Pr that is recommended to be supplied to one control target 101, in response to the inputs of the deviation and the control parameter P supplied to the one control target 101. The recommendation control parameter Pr may indicate the instructive value IV, which is recommended, for the manipulated variable MV of the control target 101.

The control model 205 may output the recommendation control parameter Pr to the control unit 210 described below, in response to the inputs of the deviation and the control parameter P from the supply unit 209 described below. The present embodiment is described as an example in which the deviation between the process variable PV and the set point SP for one physical quantity is input to the control model 205; however, deviations between process variables PV and set points SP for a plurality of physical quantities may also respectively be input.

The control model 205 may have a plurality of sub-control models 206 (in the present embodiment, as examples, two sub-control models 206a, 206b) respectively associated with a plurality of aspects preset for the state in relation to the control target 101; and use a sub-control model 206 associated with an aspect in accordance with the process variable PV, to output the recommendation control parameter Pr. The aspect may be a state in relation to the control target 101 at a certain point in time. For example, the plurality of aspects may include a first aspect in which the process variable PV is close to the set point SP, and a second aspect in which the process variable PV is far from the set point SP.

### <1.2-5(1). Sub-control Model 206>

Each sub-control model 206 may output, in response to the inputs of the deviation and the control parameter, the recommendation control parameter that is recommended to reduce the deviation. The plurality of sub-control models 206 may be provided separately from and independently of each other, and may be able to acquire the deviations and the control parameters independently of each other from the supply unit 209 described below. The two sub-control models 206a, 206b may be associated with a common set point SP; and each may output, in response to the inputs of the deviation between the common set point SP and the process variable PV, and the control parameter, the recommendation control parameter that is recommended to reduce the deviation.

In the present embodiment, as an example, the sub-control model 206a may output a recommendation control parameter with a fine interval or granularity (also referred to as fineness or precision), in the first aspect in which the process variable PV is close to the set point SP (that is, the deviation is small). The sub-control model 206a may be a model for controlling the control target 101 by prioritizing the precision over a speed, and is also referred to as the sub-control model 206a of a precision-oriented type.

The sub-control model 206b may output a recommendation control parameter with a greater interval or granularity than that of the sub-control model 206a, in the second aspect in which the process variable PV is far from the set point SP (that is, the deviation is great). The sub-control model 206b may be a model for controlling the control target 101 by prioritizing a speed over a precision, and is also referred to as the sub-control model 206b of a speed-oriented type.

For the sub-control models 206a, 206b, numerical ranges that are different from each other may be set for the deviations that are input. For example, as the numerical range of the deviation that is input, for the sub-control model 206a, a range that includes 0 and has a small absolute value (as an example, a range from -1 to 1, which is also referred to as a first numerical range) may be set; and for the sub-control model 206b, a range that does not include 0 and has an absolute value greater than that of the first numerical range (as an example, a range of -1 or less and 1 or more, which is also referred to as a second numerical range) may be set. The first numerical range and the second numerical range may not overlap with each other, and the first numerical range may be a range inside the second numerical range. Each sub-control model 206 may have a change amount output model 2061 and an addition unit 2062.

### <1.2-5(1-1). Change Amount Output Model 2061>

Each change amount output model 2061 of each sub-control model 206 outputs, in response to the inputs of the deviation and the control parameter P, a recommendation change amount for recommending a change for the control parameter P. The change amount output models 2061 of the respective sub-control models 206 may output recommendation change amounts in ranges different from each other. In the present embodiment, as an example, the recommendation change amount that is output from the change amount output model 2061 (also referred to as a change amount output model 2061a) of the sub-control model 206a, may have smaller order (also referred to as the number of digits), interval, and granularity in comparison with the recommendation change amount that is output from the change amount output model 2061 (also referred to as a change amount output model 2061b) of the sub-control model 206b. The recommendation change amount of the change amount output model 2061b may have only total three types of a maximum value, a minimum value, and an intermediate value (as an example, 0); and the process variable PV may be brought close to the set point SP by a control approximate to a full acceleration and full braking control. The recommendation change amount of the change amount output model 2061a may have more values than the change amount output model 2061b.

The change amount output model 2061 may supply the recommendation change amount to the addition unit 2062. The recommendation change amount may indicate a change amount for recommending a change from the most recent control parameter P supplied to the control target 101. In the present embodiment, as an example, the recommendation change amount may indicate a change amount that is recommended for the most recent instructive value IV for the manipulated variable MV. The change amount output model 2061 may be generated by learning processing by the learning processing unit 211, and may be stored in a storage unit (not shown).

### <1.2-5(1-2). Addition Unit 2062>

The addition unit 2062 adds the control parameter P supplied to the control target 101 and the recommendation change amount that is output from the change amount output model 2061, to calculate the recommendation control parameter Pr. The addition unit 2062 may be shared by the sub-control models 206a, 206b. The addition unit 2062 may add the control parameter P supplied to the control target 101 and the recommendation change amount that is output from the change amount output model 2061a of the sub-control model 206a, to calculate the recommendation control parameter Pr; and also add the control parameter P supplied to the control target 101 and the recommendation change amount that is output from the change amount output model 2061b of the sub-control model 206b, to calculate the recommendation control parameter Pr.

The addition unit 2062 may add the most recent control parameter P supplied from the control unit 210 and the recommendation change amount supplied from the change amount output model 2061, to calculate the recommendation control parameter Pr. The addition unit 2062 may add a control parameter P₍ₜ₋₁₎ at a time of t-1 and a recommendation change amount Δu₍ₜ₎ at a time of t, as shown in the following equation (1), to calculate a recommendation control parameter Pr₍ₜ₎ at the time t. Pr₍ₜ₎ = P₍ₜ₋₁₎ + Δu₍ₜ₎ (1)

The addition unit 2062 may store the control parameter P that is supplied from the control unit 210, for using to calculate the recommendation control parameter Pr. The addition unit 2062 may supply the calculated recommendation control parameter Pr to the control unit 210.

### <1.2-6. Specification Unit 207>

The specification unit 207 specifies an aspect in accordance with the process variable PV, among the plurality of aspects. The specification unit 207 may specify an aspect according to the deviation that is supplied from the deviation acquisition unit 203. The specification unit 207 may specify an aspect according to which of a plurality of preset numerical ranges the deviation is included in. The specification unit 207 may specify an aspect according to which of the first numerical range and the second numerical range the deviation from the deviation acquisition unit 203 is included in, the first numerical range and the second numerical range being preset in the sub-control models 206a, 206b for the deviation that is input.

The specification unit 207 may store the numerical range and identification information of the aspect (also referred to as an aspect ID) in association with each other, and may specify an aspect associated with the numerical range including the deviation from the deviation acquisition unit 203. In the present embodiment, as an example, the specification unit 207 may specify the first aspect as an aspect in accordance with the process variable PV, according to the deviation from the deviation acquisition unit 203 being included in the first numerical range. The specification unit 207 may specify the second aspect as an aspect in accordance with the process variable PV, according to the deviation from the deviation acquisition unit 203 being included in the second numerical range. The specification unit 207 may supply the aspect ID of the specified aspect to the selection unit 208.

### <1.2-7. Selection Unit 208>

The selection unit 208 selects, from among the plurality of sub-control models 206, the sub-control model 206 corresponding to the aspect specified by the specification unit 207. The selection unit 208 may store the aspect ID of each aspect and identification information (also referred to as a sub-model ID) of each sub-control model 206, in association with each other; and may select the sub-control model 206 of the sub-model ID corresponding to the aspect ID that is supplied from the specification unit 207. The selection unit 208 may supply the sub-model ID of the selected sub-control model 206 to the supply unit 209.

### <1.2-8. Supply Unit 209>

The supply unit 209 supplies, to the control model 205, the deviation acquired by the deviation acquisition unit 203 and the control parameter P acquired by the control parameter acquisition unit 204. The supply unit 209 may supply, to the control model 205, the control parameter P supplied from the control unit 210 to the control target 101, and the deviation indicating the operational state of a result of controlling the control target 101 by the control parameter P.

The supply unit 209 may supply the deviation and the control parameter to the sub-control model 206 selected by the selection unit 208, from among the plurality of sub-control models 206 in the control model 205. In the present embodiment, as an example, the supply unit 209 may perform the supply to the sub-control model 206 indicated by the sub-model ID that is supplied from the selection unit 208.

### <1.2-9. Control Unit 210>

The control unit 210 is an example of an output unit; and outputs, in response to the supply being performed from the supply unit 209 to the control model 205, the recommendation control parameter Pr that is output from the control model 205. In the present embodiment, as an example, the control unit 210 may output, to the control target 101, the recommendation control parameter Pr as the control parameter P, to control the control target 101. The control unit 210 may control the control target 101 by outputting the control parameter P that is input by an operator to the control target 101. The control unit 210 may output the control parameter P to the control target 101 in accordance with a control cycle of the control target 101.

The control unit 210 may store the control parameter P that is supplied to the control target 101 in a storage unit (not shown). The control unit 210 may store the control parameter P that is supplied to the control target 101, in the storage unit in association with the deviation that is acquired by the deviation acquisition unit 203. The control unit 210 may store the control parameter P that is supplied to the control target 101, in the storage unit in association with the deviation indicating the operational state of a result of controlling the control target 101 by the control parameter P.

### <1.2-10. Learning Processing Unit 211>

The learning processing unit 211 performs the learning processing for each change amount output model 2061 by using learning data including the deviation that is acquired by the deviation acquisition unit 203, and the control parameter P that is acquired by the control parameter acquisition unit 204.

The learning processing unit 211 may perform learning for the sub-control model 2061, according to the inputs of the deviation and the control parameter P, to output the recommendation change amount that is recommended to increase a reward value. Regarding a state of the control target 101 at a predetermined point in time (as an example, a point in time when the deviation and the control parameter P are acquired), when a reward value corresponding to the state (as an example, a reward value that is obtained by inputting, to a reward function, a value in accordance with the process variable PV at the point in time) is set as a reference reward value, the recommendation change amount may be a change amount that is recommended to increase the reward value to be higher than the reference reward value. The reward value may be a value that is determined by a preset reward function. The reward function may be a function based on the deviation, and as an example, may be a function in which the smaller the deviation is, the greater the reward value is. It should be noted that when the deviation acquisition unit 203 acquires the deviation for each of the plurality of physical quantities, the reward function may be a function based on a sum of the plurality of deviations, or may be a function based on a result of weighted additions of the plurality of deviations. As an example, the learning processing unit 211 may perform the learning by a Kernel Dynamic Policy Programming (KDPP) algorithm.

The learning processing unit 211 may perform the learning processing for each change amount output model 2061 by using separate learning data. For example, when performing the learning processing for the change amount output model 2061a, the learning processing unit 211 may perform the learning processing by using the learning data in which the deviation is included in the first numerical range. As an example, the learning processing unit 211 may perform the learning processing by using the learning data that is acquired when the control target 101 is sequentially controlled in a state in which the process variable PV is close to the set point SP. When performing the learning processing for the change amount output model 2061b, the learning processing unit 211 may perform the learning processing by using the learning data in which the deviation is included in the second numerical range, and may perform the learning processing by further using the learning data in which the deviation is included in the first numerical range. As an example, the learning processing unit 211 may perform the learning processing by using the learning data that is acquired when the control target 101 is sequentially controlled in a state in which the process variable PV is far from the set point SP.

It should be noted that between the learning data of the change amount output model 2061a and the learning data of the change amount output model 2061b, the numerical ranges in the absolute value of the deviation may be different from each other. For example, the numerical range of the absolute value of the deviation in the learning data of the change amount output model 2061a may be closer to 0 than the numerical range of the absolute value of the deviation in the learning data of the change amount output model 2061b. As an example, the deviation in the learning data of the change amount output model 2061a may have order of 10⁰, that is, a single digit, and the deviation in the learning data of the change amount output model 2061b may have order of 10¹, that is, a value of a double digit.

In addition, between the learning data of the change amount output model 2061a and the learning data of the change amount output model 2061b, the numerical ranges in the control parameter P may be different from each other. For example, the numerical range of the control parameter P in the learning data of the change amount output model 2061a may be a value in a third numerical range that includes a value (also referred to as the control parameter P at an equilibrium point) of the control parameter P when the process variable PV is stabilized to the set point SP. The numerical range of the control parameter P in the learning data of the change amount output model 2061b may be a value in a fourth numerical range that is outside the third numerical range, or may be a value in both of the third numerical range and the fourth numerical range. The control parameter P in the learning data of the change amount output model 2061a may have an interval or granularity that is smaller in comparison with that of the control parameter P in the learning data of the change amount output model 2061b.

The learning processing unit 211 may perform the learning processing for each change amount output model 2061 by using the learning data including the deviation and the control parameter P that are acquired when the set point SP is the same value. It should be noted that the learning data may be acquired from a simulator (not shown) of the system 1 instead of being acquired from the actual system 1. The simulator may be created by using actual measurement data of the equipment 100 or the like by any system identification technology. Each piece of learning data may be stored in a storage unit (not shown).

According to the apparatus 200 described above, in the control model 205, among the plurality of sub-control models 206 respectively associated with the plurality of aspects preset for the state, the sub-control model 206 associated with an aspect in accordance with the process variable, is used; and in response to the inputs of the deviation acquired by the deviation acquisition unit 203 and the control parameter P acquired by the control parameter acquisition unit 204, the recommendation control parameter Pr is output. Accordingly, by inputting the deviation and the control parameter P to the control model 205, it is possible to acquire the recommendation control parameter Pr in accordance with the aspect.

In addition, an aspect in accordance with the process variable PV is specified, and the sub-control model 206 corresponding to the specified aspect is selected from among the plurality of sub-control models 206, and the deviation and the control parameter are supplied to the selected sub-control model 206. Accordingly, it is possible to appropriately use the sub-control model 206 in accordance with the aspect and acquire the recommendation control parameter Pr.

In addition, an aspect is specified according to which of the plurality of preset numerical ranges the deviation is included in, and thus it is possible to specify an aspect in accordance with a magnitude of the deviation, that is, an aspect in accordance with a degree of disassociation between the set point SP and the process variable PV, and acquire the recommendation control parameter Pr in accordance with the aspect.

In addition, in response to the inputs of the deviation between the process variable PV and the common set point SP, and the control parameter P, each of the sub-control models 206a, 206b outputs the recommendation control parameter that is recommended to reduce the deviation. Accordingly, it is possible to acquire, separately according to an aspect, the recommendation control parameters Pr to reduce the deviation between the common set point SP and the process variable PV Therefore, it is possible to acquire, according to an aspect, the recommendation control parameter Pr for emphasizing the speed at which the equilibrium point is reached to rapidly reduce the deviation; and the recommendation control parameter Pr for emphasizing the precision at which the equilibrium point is reached to gradually reduce the deviation.

In addition, in each sub-control model 206, according to the deviation and the control parameter P that is already supplied to the control target 101, the recommendation change amount for the control parameter P is output from the change amount output model 2061; and the supplied control parameter P and the recommendation change amount are added by the common addition unit 2062 to calculate the recommendation control parameter Pr. Accordingly, unlike a case where the addition unit 2062 is provided for each sub-control model 206, it is possible to simplify the configuration of the apparatus 200.

In addition, the change amount output models 2061 of the sub-control models 206a, 206b output the recommendation change amounts in the ranges different from each other, and thus it is possible to reliably acquire the recommendation control parameter Pr for rapidly reducing the deviation and the recommendation control parameter Pr for gradually reducing the deviation, according to an aspect.

In addition, the learning processing is performed for each change amount output model 2061 to output the recommendation change amount that is recommended to increase a reward value that is determined by a preset reward function, by using the learning data including the deviation that is acquired by the deviation acquisition unit 203, and the control parameter P that is acquired by the control parameter acquisition unit 204, and in response to the inputs of the deviation and the control parameter P. Accordingly, it is possible to appropriately acquire the recommendation control parameter Pr from each sub-control model 206.

In addition, the learning processing is performed for each sub-control model 206 by using separate learning data, and thus it is possible to acquire recommendation control parameter Pr suited to the aspect from each sub-control model 206.

### <2. Change Amount Output Model 2061>

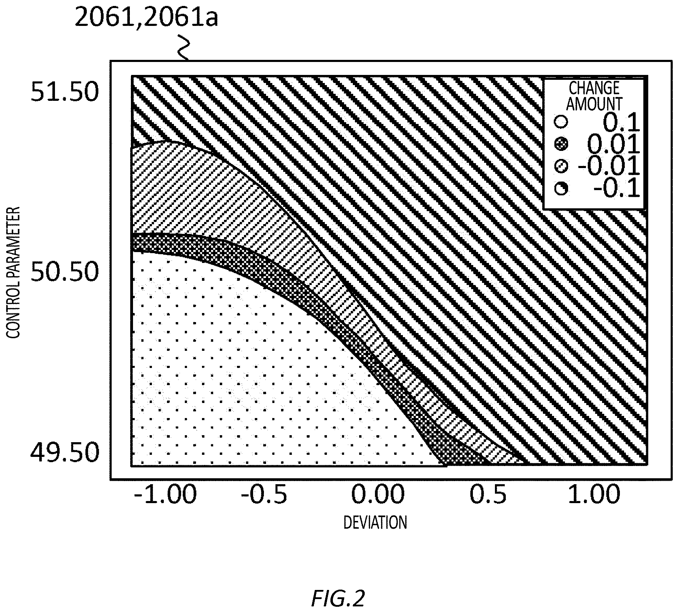

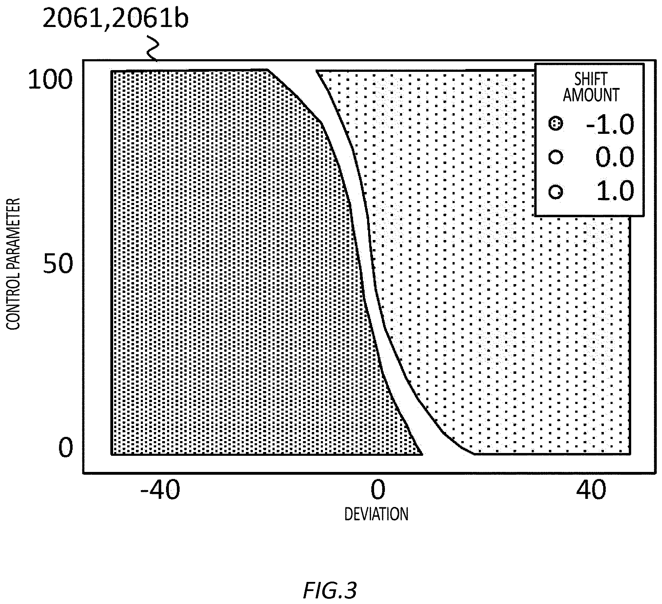

Fig. 2 and Fig. 3 show the change amount output model 2061. It should be noted that in Fig. 2 and Fig. 3 or the like, a vertical axis represents the control parameter P (as an example, the instructive value IV of the opening degree of the valve) and a horizontal axis indicates the deviation.

The change amount output model 2061 may indicate a correspondence between the combination of the deviation and the control parameter P, and the recommendation change amount. The change amount output model 2061 in the present example may be a manipulated variable map obtained by mapping the correspondence between the combination of the deviation and the control parameter P, and the recommendation change amount. The manipulated variable map may be divided into a plurality of regions respectively associated with the recommendation change amounts separate from each other, according to the combination of the control parameter P and the deviation; and may output the recommendation change amount associated with a coordinate position of the combination of the control parameter P and the deviation that are input. When such a change amount output model 2061 is used, a process is brought into a stable state at a coordinate point at which the deviation is 0 and the recommendation change amount is 0 (in the present figure, as an example, a point at which the deviation is 0 and the control parameter P is approximately 50), that is, the equilibrium point.

Here, the change amount output model 2061 in Fig. 2 may be the change amount output model 2061a which outputs the recommendation control parameter with a fine interval or granularity in an aspect in which the deviation is small; and the change amount output model 2061 in Fig. 3 may be the change amount output model 2061b which outputs the recommendation control parameter with a great interval and granularity in an aspect in which the deviation is great. In the change amount output model 2061a, the first numerical range of -1.00 to 1.00 may be set for the deviation that is input; and in the change amount output model 2061b, the second numerical range of -50 to 50 may be set for the deviation that is input. The recommendation change amount that is output from the change amount output model 2061a may have order of 10⁻² to 10⁻¹, and the recommendation change amount that is output from the change amount output model 2061b may have order of 10⁰.

It should be noted that the change amount output model 2061 may include information in relation to the entire range of the manipulated variable map. Instead of this, the change amount output model 2061 may only include information indicating a boundary of each region (as an example, coordinates or a function expression indicating a boundary), and the recommendation change amount corresponding to each region. In this case, it is possible to reduce in size a storage region for storing the change amount output model 2061.

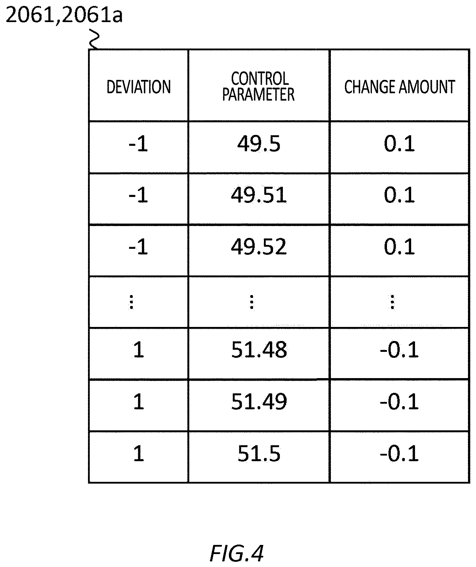

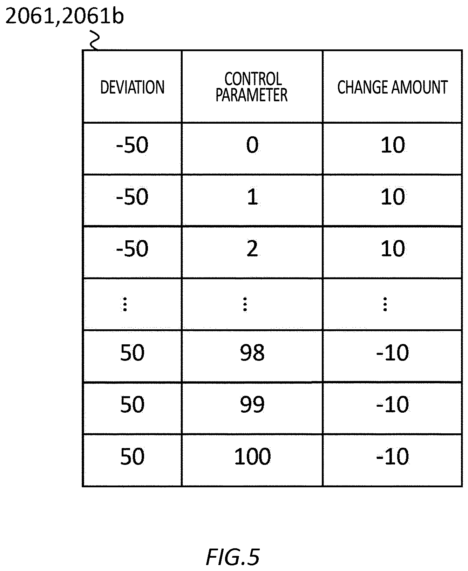

Fig. 4 and Fig. 5 show other examples of the change amount output model 2061. Fig. 4 may show the change amount output model 2061a having the same content as that of Fig. 2, and Fig. 5 may show the change amount output model 2061b having the same content as that of Fig. 3. As shown in these figures, the change amount output model 2061 may be a table in which the combination of the deviation and the control parameter P is associated with the recommendation change amount.

### <3. Operation>

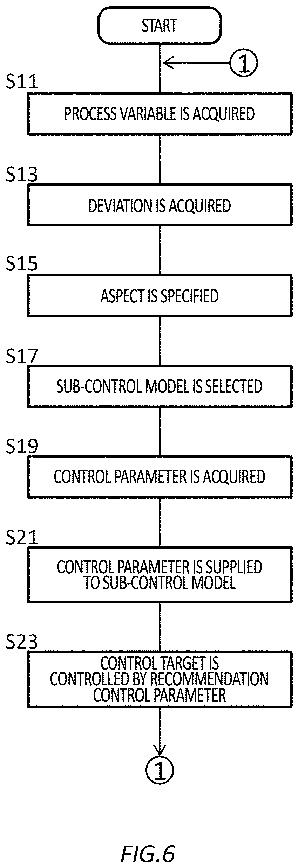

Fig. 6 shows an operation of the apparatus 200. The apparatus 200 may control the control target 101 by performing processing of steps S11 to S23. It should be noted that this operation may be started in response to the apparatus 200 being activated. In addition, at a start point of the operation, the learning processing for the change amount output model 2061 may be completed, and the set point SP may be set to the reference set point.

In step S11, the process variable acquisition unit 201 acquires the process variable PV of the state in relation to the control target 101. The set point acquisition unit 202 may acquire the process variable PV from the sensor 102 of the equipment 100.

In step S13, the deviation acquisition unit 203 acquires the deviation between the set point SP (in the present embodiment, the reference set point as an example) and the process variable PV acquired in step S13.

In step S15, the specification unit 207 specifies an aspect in accordance with the process variable PV, among the plurality of aspects. In the present embodiment, as an example, the specification unit 207 may specify either the first aspect or the second aspect according to the deviation from the deviation acquisition unit 203 being included in either the first numerical range or the second numerical range.

In step S17, the selection unit 208 selects, from among the plurality of sub-control models 206, the sub-control model 206 corresponding to the aspect specified by the specification unit 207. In the present embodiment, as an example, the selection unit 208 may select the sub-control model 206a according to the first aspect being specified; and may select the sub-control model 206b according to the second aspect being specified.

In step S19, the control parameter acquisition unit 204 acquires the control parameter P supplied to the control target 101. The control parameter acquisition unit 204 may acquire, from the control unit 210, the control parameter P supplied to the control target 101 in the most recent control cycle. As an example, the control parameter acquisition unit 204 may acquire and temporarily store the control parameter P that is output from the control unit 210 to the control target 101 in the processing of step S23 described below; and read the control parameter P in step S19. When step S19 is executed for the first time, that is, in a case where the processing of step S23 is not executed, the control parameter acquisition unit 204 may acquire an initial value of the preset control parameter P.

In step S21, the supply unit 209 supplies, to the control model 205, the control parameter P supplied from the control parameter acquisition unit 204, and the deviation supplied from the deviation acquisition unit 203. In the present embodiment, as an example, the supply unit 209 supplies the deviation and the control parameter P, to the selected sub-control model 206 among the plurality of sub-control models 206 in the control model 205. In this manner, the recommendation control parameter Pr in accordance with the control parameter P and the deviation that are input, is output from the sub-control model 206 in accordance with the aspect. In the present embodiment, as an example, the recommendation change amount in accordance with the control parameter P and the deviation that are input, may be output from the change amount output model 2061; and the recommendation change amount, and the control parameter P acquired in step S17 may be added by the addition unit 2062 to generate the recommendation control parameter Pr.

In step S23, the control unit 210 outputs the recommendation control parameter Pr from the control model 205. The control unit 210 may supply the recommendation control parameter Pr as the control parameter P to the control target 101, and control the control target 101. When the processing of step S23 is completed, the processing may shift to step S11.

### <4. Operation example>

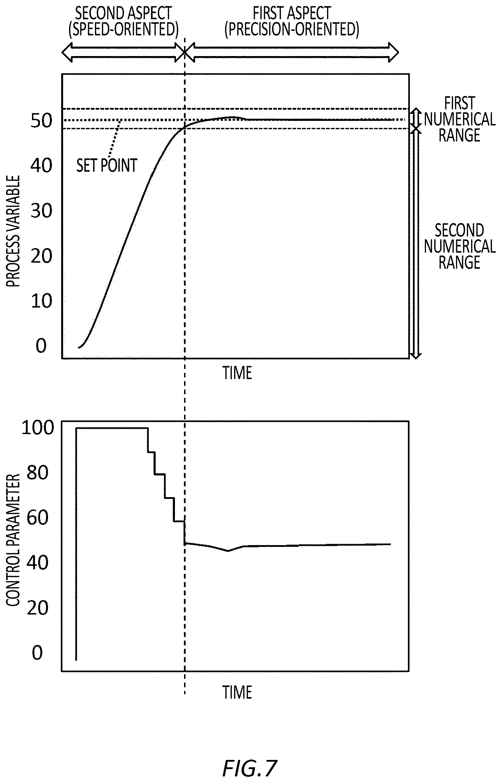

Fig. 7 shows transitions of a process variable PV and a control parameter P when the control target 101 is controlled. In the figure, the horizontal axis represents a time (a second), and the vertical axis represents the process variable PV and the control parameter P. It should be noted that in the present figure, as an example, the control parameter P may indicate the instructive value IV of the opening degree of the valve.

As shown in the present figure, in the apparatus 200 of the present embodiment, the valve of the control target 101 is controlled by using the recommendation control parameter Pr that is output from the speed-oriented sub-control model 206b according to the deviation being included in the second numerical range. In the present figure, as an example, the opening degree of the valve is roughly controlled with a change amount of ±10%. Then, the control target 101 is controlled by using the recommendation control parameter Pr that is output from the precision-oriented sub-control model 206a according to the deviation being included in the first numerical range. In the present figure, as an example, the opening degree of the valve is finely controlled with a change amount of ±0.1%. In this manner, as a result of the control target 101 being controlled by the recommendation control parameter Pr in accordance with the aspect, it is possible to maintain the process variable PV to the set point SP at a high speed with a high precision.

### <5. Modified Example>

### <5.1. System 1A>

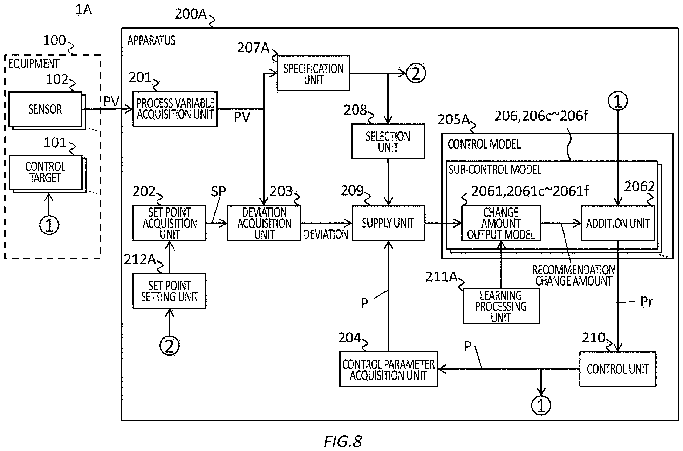

Fig. 8 shows a system 1A according to a modified example. It should be noted that the same signs and numerals are given to components that are substantially the same as those of the system 1 shown in Fig. 1, and the descriptions thereof will be omitted. The system 1A includes an apparatus 200A. The apparatus 200A may include a specification unit 207A, a set point setting unit 212A, a control model 205A, and a learning processing unit 211A.

### <5.1.1. Specification Unit 207A>

The specification unit 207A specifies an aspect in accordance with the process variable PV, among the plurality of aspects. The specification unit 207A according to the present modified example may specify an aspect according to the process variable PV that is supplied from the process variable acquisition unit 201. The specification unit 207A may specify an aspect according to which of the plurality of preset numerical ranges the process variable is included in. The specification unit 207A may specify an aspect according to which of a third numerical range to a sixth numerical range for the process variable PV, which are preset for sub-control models 206c to 206f described below in the control model 205A, the process variable PV from the process variable acquisition unit 201 is included in.

The specification unit 207A may store the numerical range and the aspect ID of each aspect in association with each other, and may specify an aspect associated with the numerical range including the process variable from the process variable acquisition unit 201. In the present embodiment, as an example, the specification unit 207A may specify a third aspect as an aspect in accordance with the process variable PV, according to the process variable PV being included in the third numerical range. The specification unit 207A may specify a fourth aspect as an aspect in accordance with the process variable PV, according to the process variable PV being included in the fourth numerical range. The specification unit 207A may specify a fifth aspect as an aspect in accordance with the process variable PV, according to the process variable PV being included in the fifth numerical range. The specification unit 207A may specify a sixth aspect as an aspect in accordance with the process variable PV, according to the process variable PV being included in the sixth numerical range.

The specification unit 207A may supply the aspect ID of the specified aspect to the selection unit 208 and the set point setting unit 212A. By the aspect ID being supplied from the specification unit 207A to the selection unit 208, the selection unit 208 may select the sub-control model 206 corresponding to the specified aspect, from among the plurality of sub-control models 206 in the control model 205A.

### <5.1.2. Set Point Setting Unit 212A>

The set point setting unit 212A is an example of a setting unit, and sets the set point SP according to the aspect specified by the specification unit 207A. The set point setting unit 212A may set, as the set point SP, any specific set point of each of the sub-control models 206c to 206f described below. The set point setting unit 212A may store the specific set point of each sub-control model 206c to 206f and the aspect ID of each aspect in association with each other; and may set, as a new set point SP, the specific set point corresponding to the aspect ID that is supplied from the specification unit 207A. The set point setting unit 212A may supply the set point SP which is set, to the set point acquisition unit 202. In this manner, the new set point SP may be supplied from the set point acquisition unit 202 to the deviation acquisition unit 203, and the deviation acquisition unit 203 may acquire the deviation between the new set point SP and the process variable PV.

### <5.1.3. Control Model 205A>

Similar to the control model 205 in the embodiment described above, in response to inputs of the deviation and the control parameter P, the control model 205A outputs the recommendation control parameter Pr that is recommended to be supplied to the control target 101. The control model 205A in the present modified example may have four sub-control models 206 (also referred to as the sub-control models 206c to 206f) respectively associated with the plurality of aspects preset for the state in relation to the control target 101; and may use the sub-control model 206 associated with an aspect in accordance with the process variable PV, to output the recommendation control parameter Pr.

The sub-control models 206c to 206f may be provided for respective points of the set points, and may be associated with the specific set points different from each other. Each specific set point may be used as the set point SP by the set point setting unit 212A. Each of the sub-control models 206c to 206f may output, in response to the inputs of the deviation between the specific set point and the process variable PV, and the control parameter P, the recommendation control parameter Pr that is recommended to reduce the deviation. As an example of the present modified example, the sub-control models 206c to 206f are selected by the selection unit 208 according to an aspect; and the specific set point of the sub-control model 206 that is selected, is set as the set point SP by the set point setting unit 212A; and thus in response to the inputs of the deviation between the specific set point as the set point SP, and the process variable PV, and the control parameter P, each of the sub-control models 206c to 206f outputs, when selected, the recommendation control parameter Pr.

The sub-control models 206c to 206f may have change amount output models 2061c to 2061f, respectively. In response to the inputs of the deviation and the control parameter P, each of the change amount output models 2061c to 2061f outputs the recommendation change amount for recommending the change for the control parameter P. The change amount output models 2061c to 2061f may output the recommendation change amounts in ranges different from each other, or may output the recommendation change amounts in the same range. The recommendation change amounts that are output from the change amount output models 2061c to 2061f may have approximately the same interval and granularity as each other.

### <5.1-4. Learning Processing Unit 211A>

The learning processing unit 211 performs the learning processing for each of the change amount output models 2061c to 2061f in a manner similar to the learning processing unit 211 in the embodiment described above. The learning processing unit 211A may perform the learning processing for each of the change amount output models 2061c to 2061f by using separate learning data.

For example, when performing the learning processing for the change amount output model 2061c of the sub-control model 206c, the learning processing unit 211A may perform the learning processing by using the learning data in which the deviation is included in the third numerical range. The learning data of the change amount output model 2061c may include the deviation and the control parameter P that are acquired when the set point SP is preset to the specific set point of the sub-control model 206c.

When performing the learning processing for the change amount output model 2061d of the sub-control model 206d, the learning processing unit 211A may perform the learning processing by using the learning data in which the deviation is included in the fourth numerical range. The learning data of the change amount output model 2061d may include the deviation and the control parameter P that are acquired when the set point SP is preset to the specific set point of the sub-control model 206d.

When performing the learning processing for the change amount output model 2061e of the sub-control model 206e, the learning processing unit 211A may perform the learning processing by using the learning data in which the deviation is included in the fifth numerical range. The learning data of the change amount output model 2061e may include the deviation and the control parameter P that are acquired when the set point SP is preset to the specific set point of the sub-control model 206e.

When performing the learning processing for the change amount output model 2061f of the sub-control model 206f, the learning processing unit 211A may perform the learning processing by using the learning data in which the deviation is included in the sixth numerical range. The learning data of the change amount output model 2061f may include the deviation and the control parameter P that are acquired when the set point SP is preset to the specific set point of the sub-control model 206f.

It should be noted that between the learning data of the change amount output model 2061c and the learning data of the change amount output model 2061f, the absolute values of the deviations may approximately be the same as each other; and as an example, orders of the deviations may be equal to each other. It should be noted that the learning data may be acquired from a simulator (not shown) of the system 1A instead of being acquired from the actual system 1A.

With the apparatus 200A described above, an aspect is specified according to which of the plurality of preset numerical ranges the process variable PV is included in, and thus it is possible to specify an aspect in accordance with the process variable PV and acquire the recommendation control parameter Pr in accordance with the aspect.

In addition, any specific set point of the sub-control models 206c to 206f is set, as the set point SP, according to an aspect; and the sub-control model 206 in accordance with an aspect among the sub-control models 206c to 206f, outputs the recommendation control parameter Pr in accordance with the deviation between the specific set point as the set point SP, and the process variable PV, and the control parameter P. Accordingly, while the set point SP is switched according to a progress of the process, it is possible to acquire the recommendation control parameter Pr for reducing the deviation between the set point SP after the switching and the process variable PV

### <5.2. Correspondence Table>

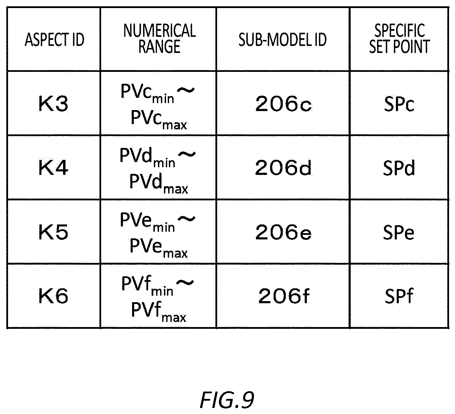

Fig. 9 shows a correspondence between an aspect ID, a numerical range of a process variable PV, a sub-model ID, and a specific set point. "K3" to "K6" in the figure may be the aspect IDs of the third aspect to the sixth aspect. Each of "PVcₘᵢₙ to PVcₘₐₓ", "PVdₘᵢₙ to PVdₘₐₓ", "PVeₘᵢₙ to PVeₘₐₓ", and "PVfₘᵢₙ to PVfₘₐₓ" may indicate the numerical range of the process variable PV "206c" to "206f" may be the sub-model IDs of the sub-control models 206c to 206f. "SPc" to "SPf" may be the specific set points of the sub-control models 206c to 206f.

The specification unit 207A may specify the aspect ID according to which of the numerical ranges in the figure the process variable PV is included. The selection unit 208 may select the sub-control model 206 having the sub-model ID corresponding to the specified aspect ID, from among the respective aspect IDs in the figure. The set point setting unit 212A may set, as the set point SP, the specific set point corresponding to the specified aspect ID, among the respective aspect IDs in the figure.

### <5.3. Operation>

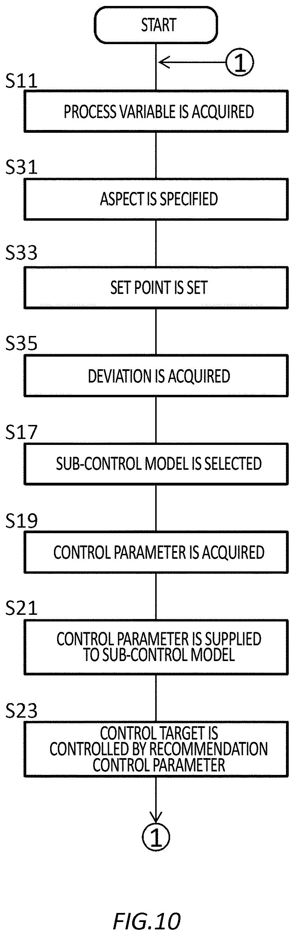

Fig. 10 shows an operation of the apparatus 200A. The apparatus 200A may control the control target 101 by performing the processing of steps S11 to S23. It should be noted that this operation may be started in response to the apparatus 200 being activated. In addition, at a start point of the operation, the learning processing for the change amount output model 2061 may be completed. In comparison with the operation of the apparatus 200A according to the second embodiment, and the operation of the apparatus 200 according to the first embodiment, a difference is performing the processing of steps S31 to S35 between steps S17 and S17.

In step S31, the specification unit 207A specifies an aspect in accordance with the process variable PV, among the plurality of aspects. In the present modified example, as an example, the specification unit 207A may specify any of the third aspect to the sixth aspect as an aspect in accordance with the process variable PV

In step S33, the set point setting unit 212A sets the set point SP according to the aspect specified by the specification unit 207A. The set point setting unit 212A may set, as the set point SP, the specific set point corresponding to the aspect specified in step S31, among the specific set points of the sub-control models 206c to 206f.

In step S35, the deviation acquisition unit 203 acquires the deviation between the set point SP and the process variable PV. The deviation acquisition unit 203 may acquire the deviation between the set point SP set in step S33, and the process variable PV acquired in step S11. When the processing of step s35 is completed, the processing may shift to step s17. In this manner, the sub-control model 206 corresponding to the aspect specified in step S31 is selected, from among the plurality of sub-control models 206c to 206f.

### <5.4. Operation Example>

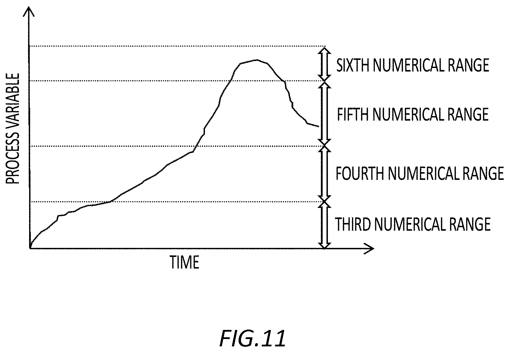

Fig. 11 shows the transition of the process variable PV when the control target 101 is controlled. In the figure, the horizontal axis represents a time (a second), and the vertical axis represents the process variable PV It should be noted that in the present figure, as an example, the control parameter P may indicate the instructive value IV of a temperature inside a furnace.

As shown in the present figure, in the apparatus 200A according to the present modified example, the third aspect is specified according to the process variable PV being included in the third numerical range according to the process progressing. Then, the control target 101 is controlled by using the recommendation control parameter Pr that is output, by the deviation between the set point SP in accordance with the third aspect and the process variable PV, and the control parameter P being input to the sub-control model 206c.

Similarly, the fourth aspect is specified according to the process variable PV being included in the fourth numerical range. Then, the control target 101 is controlled by using the recommendation control parameter Pr that is output, by the deviation between the set point SP in accordance with the fourth aspect and the process variable PV, and the control parameter P being input to the sub-control model 206d.

Similarly, the fifth aspect is specified according to the process variable PV being included in the fifth numerical range. Then, the control target 101 is controlled by using the recommendation control parameter Pr that is output, by the deviation between the set point SP in accordance with the fifth aspect and the process variable PV, and the control parameter P being input to the sub-control model 206e.

Then, the sixth aspect is specified according to the process variable PV being included in the sixth numerical range. Then, the control target 101 is controlled by using the recommendation control parameter Pr that is output, by the deviation between the set point SP in accordance with the sixth aspect and the process variable PV, and the control parameter P being input to the sub-control model 206f.

### <6. Other Modified Example>

It should be noted that in the embodiment described above and the modified examples, the control models 205, 205A are described to have the change amount output model 2061 and the addition unit 2062; these may not be included as long as the recommendation control parameter Pr is output in response to the inputs of the deviation and the control parameter P. In this case, the control models 205, 205A may be a learning model generated by an algorithm such as a kernel dynamic policy programming method, deep reinforcement learning, a support vector machine, a logistic regression, decision tree, and a neural network. The learning processing units 211, 211A may perform the learning processing for the control models 205, 205A by using the learning data including the deviation acquired by the deviation acquisition unit 203, and the control parameter P acquired by the control parameter acquisition unit 204.

In addition, the change amount output model 2061 is described as a map or a table generated by a learning algorithm of a kernel dynamic policy programming method; but may be generated by another algorithm such as deep reinforcement learning, a support vector machine, a logistic regression, a decision tree, and a neural network; and may be a model of another form different from the map or the table.

In addition, the deviation and the control parameter P are described to be input to the change amount output model 2061; however, another value may be further input. The other value may be, for example, a differential value or an integral value of the process variable by the sensor 102.

In addition, the apparatuses 200, 200A are described to have the process variable acquisition unit 201, the set point acquisition unit 202, and the learning processing unit 211, but may not have any of these. In a case where the apparatus 200, 200A do not have the process variable acquisition unit 201 and the set point acquisition unit 202, the deviation acquisition unit 203 may acquire the deviation calculated by an external device. In a case of not having the learning processing unit 211, 211A, the apparatus 200, 200A may have the change amount output model 2061 on which the learning is performed in advance by an external device.

In addition, each sub-control model 206 is described to be provided independently and separately, and to be independently supplied with the deviation and the control parameter from the supply unit 209, but may be provided in an integrated manner. In this case, each sub-control model 206 may constitute each portion of the control models 205, 205A. As an example, the control models 205, 205A may be manipulated variable maps obtained by mapping the correspondence between the combination of the deviation and the control parameter P, and the recommendation control parameter Pr; and each sub-control model 206 may be a center portion or a peripheral portion of the manipulated variable map. In a case where the plurality of sub-control models 206 are integrated to constitute the control model 205, the apparatuses 200, 200A may not have the specification unit 207 and the selection unit 208; and in response to the supply unit 209 inputting the deviation and the control parameter P to the control models 205, 205A, the recommendation control parameter Pr may be output from the portion of the sub-control model 206, among the respective sub-control models 206 in the control models 205, 205A. Such control models 205, 205A may be generated by providing a common input unit for the sub-control models 206 that are generated by the learning processing units 211, 211A and that are separate from each other; and by setting the deviation and the control parameter P that is supplied from the supply unit 209 to be input to any of the sub-control models 206 according to the numerical range.

In addition, in the embodiment described above, the control model 205 is described to have two sub-control models 206a, 206b associated with the common set point SP, but may also have three or more sub-control models 206 associated with the common set point SP. In addition, the control model 205 may further have another sub-control model 206 having a different set point.

In addition, various embodiments of the present invention may be described with reference to flowcharts and block diagrams, wherein the block may serve as (1) a stage in a process in which an operation is performed, or (2) a section of an apparatus having a role of performing an operation. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disc (DVD), a Blu-ray (registered trademark) disc, a memory stick, an integrated circuit card, or the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like, and a conventional procedural programming language such as a "C" programming language or a similar programming language.

Computer-readable instructions may be provided to a processor of a general-purpose computer, special purpose computer, or other programmable data processing devices, or to a programmable circuit, locally or via a local area network (LAN), wide area network (WAN) such as the Internet, or the like, so that the computer-readable instructions are executed to create means for performing operations specified in the flowcharts or block diagrams. Examples of the processor include a computer processor, a processing unit, a microprocessor, a digital signal processor, a controller, a microcontroller, and the like.

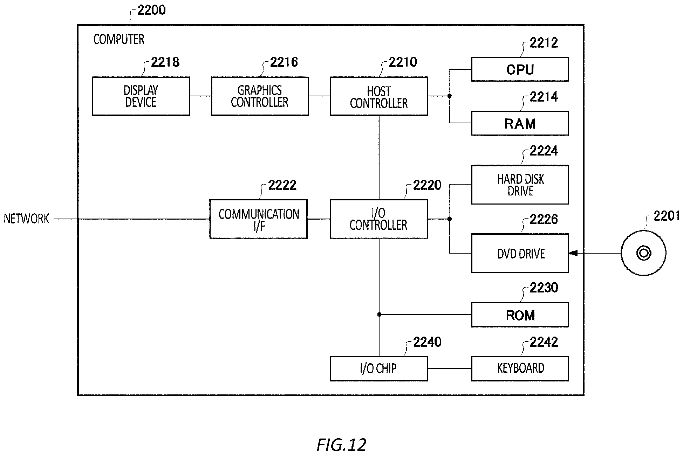

Fig. 12 shows an example of a computer 2200 in which a plurality of aspects of the present invention may be entirely or partially embodied. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a stage of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, an RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

The program is provided by a computer-readable medium such as the DVD-ROM 2201 or the IC card. The program is read from a computer-readable medium, installed in the hard disk drive 2224, the RAM 2214, or the ROM 2230 which are also examples of the computer-readable medium, and executed by the CPU 2212. The information processing written in these programs is read by the computer 2200 and provides cooperation between the programs and the above-described various types of hardware resources. The apparatus or method may be constituted by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing based on a processing written in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in the entry, and thereby acquiring the attribute value of the second attribute associated with the first attribute meeting a predetermined condition.

The programs or software modules described above may be stored in a computer-readable medium on the computer 2200 or near the computer 2200. In addition, a recording medium such as a hard disk or an RAM provided in a server system connected to a dedicated communication network or the Internet can be used as a computer-readable medium, thereby providing a program to the computer 2200 via the network.

While the present invention has been described by way of the embodiments, the technical scope of the present invention is not limited to the above-described embodiments. It is apparent to persons skilled in the art that various alterations or improvements can be made to the above-described embodiments. It is also apparent from the described scope of the claims that the embodiments to which such alterations or improvements are made can be included in the technical scope of the present invention.

It should be noted that the operations, procedures, steps, stages, or the like of each process performed by a device, system, program, and method shown in the claims, the specification, or the drawings can be performed in any order as long as the order is not indicated by "prior to," "before," or the like and as long as the output from a previous process is not used in a later process. Even if the process flow is described using phrases such as "first" or "next" in the claims, the specification, or the drawings for the sake of convenience, it does not necessarily mean that the process must be performed in this order.

### EXPLANATION OF REFERENCES

1: system
100: equipment
101: control target
102: sensor
200: apparatus
201: process variable acquisition unit
202: set point acquisition unit
203: deviation acquisition unit
204: control parameter acquisition unit
205: control model
206: sub-control model
207: specification unit
208: selection unit
209: supply unit
210: control unit
211: learning processing unit
212: set point setting unit
206: sub-control model
2061: change amount output model
2062: addition unit
2200: computer
2201: DVD-ROM
2210: host controller
2212: CPU
2214: RAM
2216: graphics controller
2218: display device
2220: input/output controller
2222: communication interface
2224: hard disk drive
2226: DVD-ROM drive
2230: ROM
2240: input/output chip
2242: keyboard.

## Claims

1. An apparatus comprising:
a first acquisition unit which acquires a deviation between a process variable of a state in relation to a control target, and a set point;
a second acquisition unit which acquires a control parameter supplied to the control target;
a supply unit which supplies the deviation acquired by the first acquisition unit, and the control parameter acquired by the second acquisition unit, to a control model that has a plurality of sub-control models respectively associated with a plurality of aspects preset for the state, the control model using a sub-control model associated with an aspect in accordance with the process variable, among the plurality of sub-control models, to output a recommendation control parameter that is recommended to be supplied to the control target, in response to inputs of a deviation and a control parameter; and
an output unit which outputs, in response to the supply being performed from the supply unit to the control model, the recommendation control parameter that is output from the control model.

2. The apparatus according to claim 1, further comprising:
a specification unit which specifies an aspect in accordance with the process variable, among the plurality of aspects; and
a selection unit which selects, from among the plurality of sub-control models, a sub-control model corresponding to the aspect specified by the specification unit, wherein
the supply unit supplies the deviation acquired by the first acquisition unit, and the control parameter acquired by the second acquisition unit, to the sub-control model selected by the selection unit among the plurality of sub-control models.

3. The apparatus according to claim 2, wherein the specification unit specifies an aspect according to which of a plurality of preset numerical ranges the deviation is included in.

4. The apparatus according to claim 2, wherein each of at least two sub-control models among the plurality of sub-control models outputs, in response to inputs of a deviation between a process variable and a common set point, and a control parameter, a recommendation control parameter that is recommended to reduce the deviation.

5. The apparatus according to claim 2, wherein the specification unit specifies an aspect according to which of a plurality of preset numerical ranges the process variable is included in.

6. The apparatus according to claim 2, wherein
at least two sub-control models among the plurality of sub-control models are associated with specific set points different from each other, and each outputs, in response to inputs of a deviation between a process variable and a specific set point which is included in the specific set points, and a control parameter, a recommendation control parameter that is recommended to reduce the deviation,
the apparatus further comprising a setting unit which sets, as the set point, any of the specific set points of the at least two sub-control models according to the aspect specified by the specification unit.

7. The apparatus according to claim 1, wherein
each sub-control model has
a change amount output model which outputs, in response to inputs of a deviation and a control parameter, a recommendation change amount for recommending a change for the control parameter, and
an addition unit which adds the control parameter supplied to the control target and the recommendation change amount that is output from the change amount output model, to calculate the recommendation control parameter, and
the plurality of sub-control models share the addition unit.

8. The apparatus according to claim 7, wherein change amount output models, each of which is the change amount output model, in at least two sub-control models among the plurality of sub-control models, output recommendation change amounts, each of which is the recommendation change amount, in ranges different from each other.

9. The apparatus according to claim 8, further comprising: a learning processing unit which performs learning processing for each change amount output model to output the recommendation change amount that is recommended to increase a reward value that is determined by a preset reward function, by using learning data including the deviation that is acquired by the first acquisition unit, and the control parameter that is acquired by the second acquisition unit, and in response to inputs of the deviation and the control parameter.

10. The apparatus according to claim 9, wherein the learning processing unit performs learning processing for each change amount output model by using separate learning data.

11. A method comprising:
performing a first acquisition by acquiring a deviation between a process variable of a state in relation to a control target, and a set point;
performing a second acquisition by acquiring a control parameter supplied to the control target;
performing a first supply by supplying the deviation acquired by the performing the first acquisition, and the control parameter acquired by the performing the second acquisition, to a control model that has a plurality of sub-control models respectively associated with a plurality of aspects preset for the state, the control model using a sub-control model associated with an aspect in accordance with the process variable, among the plurality of sub-control models, to output a recommendation control parameter that is recommended to be supplied to the control target, in response to inputs of a deviation and a control parameter; and
performing an output by outputting, in response to the supply being performed by the performing the first supply to the control model, the recommendation control parameter that is output from the control model.

12. A program that causes a computer to function as:
a first acquisition unit which acquires a deviation between a process variable of a state in relation to a control target, and a set point;
a second acquisition unit which acquires a control parameter supplied to the control target;
a supply unit which supplies the deviation acquired by the first acquisition unit, and the control parameter acquired by the second acquisition unit, to a control model that has a plurality of sub-control models respectively associated with a plurality of aspects preset for the state, the control model using a sub-control model associated with an aspect in accordance with the process variable, among the plurality of sub-control models, to output a recommendation control parameter that is recommended to be supplied to the control target, in response to inputs of a deviation and a control parameter; and
an output unit which outputs, in response to the supply being performed from the supply unit to the control model, the recommendation control parameter that is output from the control model.
